# EUROPEAN PATENT APPLICATION

(11) **EP 4 831 829 A1**
(43) Date of publication of application: **28.10.2026**
(21) Application number: 24906471.8
(22) Date of filing: 19.12.2024
(51) Int. Cl.: G06F 16/25

(54) **DIAGNOSIS DATA PROCESSING METHOD AND APPARATUS**

(30) Priority: 20.12.2023 CN 202311769663
(71) Applicant: Yinwang Intelligent Technologies Co., Ltd., Shenzhen, Guangdong 518110 (CN)
(72) Inventor: ZHANG, Lingling, Shenzhen, Guangdong 518129 (CN); WANG, Yanming, Shenzhen, Guangdong 518129 (CN)
(74) Representative: Henselmann, Alexander Gerhard
(86) International application number: PCT/CN2024/140739
(87) International publication number: WO 2025/130996

(57) **Abstract**

This application discloses a diagnostic data processing method and apparatus, relating to the field of data conversion technologies. It can simplify a configuration procedure of a diagnostic data file in an ARXML format and improve accuracy of data configuration. The method includes: A diagnostic data processing apparatus generates a first template file based on N files in a first data format, where the first template file includes an index of first information of each diagnostic instance, that is of the N files in the first data format, in a corresponding file in the first data format. Then, the diagnostic data processing apparatus automatically generates a file in a second data format based on the N files in the first data format and the first template file.

## Description

This application claims priority to Chinese Patent Application No. 202311769663.5, filed with the China National Intellectual Property Administration on December 20, 2023 and entitled "DIAGNOSTIC DATA PROCESSING METHOD AND APPARATUS", which is incorporated herein by reference in its entirety.

### TECHNICAL FIELD

This application relates to the field of data conversion technologies, and in particular, to a diagnostic data processing method and apparatus.

### BACKGROUND

A diagnostic management module on an AUTOSAR adaptive platform (adaptive platform, AP) can implement diagnostic functions based on the ISO 14229-1 standard. The diagnostic management module can diagnose vehicles without disassembling a device. However, since different vehicles come from different manufacturers, and the way provided by most manufacturers of carrying data required for diagnosis may be different from the AUTOSAR specification. In the AUTOSAR specification, data required for diagnosis provided by manufacturers needs to be integrated into ARXML files, and vehicles are diagnosed based on the ARXML files.

In conventional technologies, users can manually configure related diagnostic data by using an AUTOSAR-provided ARXML file configuration tool (AUTOSAR tool platform, Artop). However, such a way requires the users to configure a large quantity of configuration items, which is complex and cumbersome.

### SUMMARY

Embodiments of this application provide a diagnostic data processing method and apparatus, so that a configuration procedure of a diagnostic data file in an ARXML format can be simplified and accuracy of data configuration can be improved.

To achieve the foregoing objectives, the following technical solutions are used in this application.

According to a first aspect, this application provides a diagnostic data processing method, including: obtaining N files in a first data format, where the N files in the first data format include a diagnostic instance and first information of the diagnostic instance, N is greater than or equal to 1, and the N files in the first data format are used for diagnosis of a same vehicle; generating a first template file based on the N files in the first data format, where the first template file includes an index of first information of each diagnostic instance, that is of the N files in the first data format, in a corresponding file in the first data format; and generating a file in a second data format based on the N files in the first data format and the first template file.

In this way, a diagnostic data processing apparatus can automatically generate the file in the second data format based on the N files in the first data format, without requiring a user to configure a large quantity of configuration items. This simplifies a configuration procedure of a diagnostic data file in a uniform format and improves accuracy of data configuration.

In a possible implementation, the generating the file in the second data format based on the N files in the first data format and the first template file includes: generating the file in the second data format based on the N files in the first data format, the first template file, and a service table, where the service table includes diagnostic service information providable by a vehicle, the diagnostic service information includes at least one of a unified diagnostic service, a unified diagnostic service sub-function, an addressing mode of the unified diagnostic service, and access permission of the unified diagnostic service, and the file in the second data format includes the diagnostic service and a diagnostic instance corresponding to each diagnostic service.

In this way, the diagnostic data processing apparatus can generate the file in the second data format based on the diagnostic service information that the vehicle is capable of providing, the N files in the first data format, and the first template file, and the obtained file in the second data format better meets a diagnostic service requirement of the vehicle, thereby facilitating subsequent diagnosis of the vehicle.

In a possible implementation, the diagnostic instance includes a data identifier and/or a diagnostic routine.

Optionally, the diagnostic instance may further include another diagnosis-related instance. This is not specifically limited in embodiments of this application.

In a possible implementation, the first information includes at least one of an identifier value of the diagnostic instance, a size of data of the diagnostic instance, a communication identifier of the diagnostic instance, an expected storage path of the data of the diagnostic instance in the file in the second data format, and access permission of the diagnostic instance.

In this way, the diagnostic data processing apparatus can obtain the first template file based on the first information of the diagnostic instance, and then the diagnostic processing apparatus can determine, based on content in the first template file, a location, of the first information, in the N files in the first data format, to obtain the information of the diagnostic instance and generate the file in the second data format.

In a possible implementation, the generating the file in the second data format based on the N files in the first data format and the first template file includes: creating a first object corresponding to each diagnostic instance in the N files in the first data format, where the first object conforms to the second data format; creating at least one group of second objects based on the first template file, where each diagnostic instance corresponds to one group of second objects, and each group of second objects conforms to the second data format; and associating each group of second objects in the at least one group of second objects, a corresponding first object, and a first process corresponding to the first object with each other, to obtain the file in the second data format, where the first process is used to implement a function described by the first object.

In this way, the diagnostic data processing apparatus can associate each group of second objects in the at least one group of second objects, the corresponding first object, and the first process corresponding to the first object with each other, to obtain the file in the second data format.

In a possible implementation, the diagnostic instance in the N files in the first data format includes M diagnostic trouble codes, M is greater than or equal to 1, first information of the M diagnostic trouble codes respectively includes identifiers of M groups of trouble-triggering events, and the first template file further includes the M groups of events; and the generating the file in the second data format based on the N files in the first data format and the first template file includes: creating a first object corresponding to each diagnostic instance in the N files in the first data format, where the first object conforms to the second data format; respectively creating M groups of third objects based on the M groups of events in the first template file, where each group of third objects conforms to the second data format; and associating the M groups of third objects, a first object corresponding to each group of third objects, and a second process with each other, to obtain the file in the second data format, where the second process is used to implement a trouble-triggering event corresponding to the first object.

In this way, the diagnostic data processing apparatus can associate the M groups of third objects, the first object corresponding to each group of third objects, and the second process with each other, to obtain the file in the second data format corresponding to the M diagnostic trouble codes.

In a possible implementation, the first information of the M diagnostic trouble codes respectively includes M groups of customized configuration items, each group of customized configuration items includes H groups of customized data, H is greater than or equal to 1, and the first template file further includes the M groups of customized configuration items; and after the creating the first object corresponding to each diagnostic instance in the N files in the first data format, the method further includes: creating M fourth objects corresponding to the M diagnostic trouble codes in the N files in the first data format, where each fourth object conforms to the second data format; creating M*H groups of fifth objects corresponding to the H groups of customized data in the M groups of customized configuration items in the N files in the first data format, where each fifth object conforms to the second data format; and associating the M*H groups of fifth objects, the M fourth objects, and a third process with each other, to obtain the file in the second data format, where the third process is used to implement a function described by the fifth object.

In this way, the user can customize a configuration item of a diagnostic trouble code, and associate the M*H groups of fifth objects, the M fourth objects, and the third process with each other, to obtain the file in the second data format corresponding to the customized configuration item. This increases scalability of diagnostic data.

In a possible implementation, the generating the file in the second data format based on the service table includes: creating a sixth object of one service table corresponding to the N files in the first data format, where the sixth object conforms to the second data format; and creating a group of seventh objects based on a diagnostic service that the vehicle is capable of providing in the service table, where the seventh objects conform to the second data format.

In a possible implementation, the generating the file in the second data format based on the N files in the first data format, the first template file, and the service table includes: creating the first object corresponding to each diagnostic instance in the N files in the first data format; creating the sixth object of the one service table corresponding to the N files in the first data format; and associating the created first object with the created sixth object, to obtain the file in the second data format.

In this way, the diagnostic data processing apparatus can associate the first object with the sixth object to obtain one file in the second data format corresponding to the N first data format.

For example, the diagnostic data processing apparatus can associate the first object of the data identifier with the sixth object of the service table. For another example, the diagnostic data processing apparatus can associate the first object of the diagnostic routine with the sixth object of the service table. For another example, the diagnostic data processing apparatus can associate the first object of the diagnostic trouble code with the sixth object of the service table. For another example, the diagnostic data processing apparatus may further associate the first object of the data identifier, the first object of the diagnostic routine, the first object of the diagnostic trouble code, and the sixth object of the service table with each other.

In a possible implementation, the file in the second data format includes one or both of an extensible markup language XML file and a global universal diagnostic distance library format ODX file.

Optionally, the file in the second data format may alternatively be a file in another format. This is not specifically limited in embodiments of this application.

According to a second aspect, this application provides a diagnostic data processing apparatus, including: a receiving module, configured to obtain N files in a first data format, where the N files in the first data format include a diagnostic instance and first information of the diagnostic instance, N is greater than or equal to 1, and the N files in the first data format are used for diagnosis of a same vehicle; and a processing module, configured to generate a first template file based on the N files in the first data format, where the first template file includes an index of first information of each diagnostic instance, that is of the N files in the first data format, in a corresponding file in the first data format; and the processing module is further configured to generate a file in a second data format based on the N files in the first data format and the first template file.

According to a third aspect, this application provides a diagnostic data processing apparatus, including a memory and at least one processor. The memory is configured to store program code, and the at least one processor is configured to execute the program code, to implement the method according to the first aspect or any one of the implementations of the first aspect.

According to a fourth aspect, this application provides a vehicle, including the apparatus according to the second aspect or the third aspect.

According to a fifth aspect, this application provides a computer-readable storage medium. The computer-readable storage medium includes a computer program or instructions. When the computer program or the instructions are run on a diagnostic data processing apparatus, the diagnostic data processing apparatus according to the second aspect is caused to perform the method according to the first aspect.

According to a sixth aspect, this application provides a computer program product. The computer program product includes a computer program or instructions. When the computer program or the instructions are run on a computer, the computer is caused to perform the method according to the first aspect.

According to a seventh aspect, this application provides a chip system, including a processor. The processor is configured to invoke, from a memory, a computer program stored in the memory and run the computer program, to perform the method according to any one of the implementations of the first aspect.

For technical effects corresponding to the second aspect to the seventh aspect and any implementation of the second aspect to the seventh aspect, refer to the technical effects corresponding to the first aspect and any implementation of the first aspect. Details are not described herein again.

### BRIEF DESCRIPTION OF DRAWINGS

FIG. 1A is a diagram of a diagnostic data processing method according to an embodiment of this application;
FIG. 1B is a diagram of a vehicle system according to an embodiment of this application;
FIG. 2A is a diagram of a diagnostic data processing method according to an embodiment of this application;
FIG. 2B is a diagram of another diagnostic data processing method according to an embodiment of this application;
FIG. 3 is a flowchart of another diagnostic data processing method according to an embodiment of this application;
FIG. 4 is a diagram of diagnostic data according to an embodiment of this application;
FIG. 5 is a flowchart of another diagnostic data processing method according to an embodiment of this application;
FIG. 6 is a diagram of a diagnostic data association relationship according to an embodiment of this application;
FIG. 7 is a diagram of another diagnostic data association relationship according to an embodiment of this application;
FIG. 8 is a flowchart of another diagnostic data processing method according to an embodiment of this application;
FIG. 9 is a diagram of another diagnostic data association relationship according to an embodiment of this application;
FIG. 10 is a flowchart of another diagnostic data processing method according to an embodiment of this application;
FIG. 11 is a diagram of diagnostic data according to an embodiment of this application; and
FIG. 12 is a diagram of a structure of a diagnostic data processing apparatus according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The terms "first" and "second" mentioned below are merely intended for a purpose of description, and should not be understood as an indication or implication of relative importance or implicit indication of a quantity of indicated technical features. Therefore, a feature limited by "first", "second", or the like may explicitly or implicitly include one or more features.

In addition, in this application, orientation terms such as "up", "down", "left", "right", "horizontal", and "vertical" are defined relative to an orientation in which components are schematically placed in the accompanying drawings. It should be understood that, these directional terms are relative concepts that are used for relative description and clarification, and may vary accordingly based on changes of the orientation in which the components are placed in the accompanying drawings.

In this application, unless otherwise clearly specified and limited, a term "connection" should be understood in a broad sense. For example, the "connection" may be a fixed connection, a detachable connection, or an integrated connection, or may be a direct connection or an indirect connection implemented through an intermediate medium.

Some terms in this application are first described, to help a person skilled in the art have a better understanding.

### (1) Automotive open system architecture (automotive open system architecture, AUTOSAR)

The AUTOSAR is an open and standardized software architecture jointly developed by global vehicle manufacturers, component suppliers, and electronic software system companies. The AUTOSAR has the following features: a. The AUTOSAR is dedicated to resolving software development difficulties caused by different hardware platforms, so that developers can focus on innovation in vehicle software functions. b. The AUTOSAR provides standard software interface definitions. Engineers can allocate required software components to electronic control units (electronic control units, ECUs) of vehicles based on actual requirements, to implement reusability of standard software components. c. Application layer software components of the AUTOSAR are independent of hardware. Application developers can specify details of each vehicle function in application software without worrying about incompatibility between underlying software services and hardware interfaces.

### 2. Unified diagnostic service (unified diagnostic service, UDS) protocol

The unified diagnostic service protocol, also known as international organization for standardization (international organization for standardization, ISO)-14229, is an application layer protocol and a normalized standard for diagnostic services. It defines all diagnostic commands, for example, a message format for diagnostic requests and diagnostic responses. The UDS protocol may be implemented over a plurality of protocols. For example, it is defined in 14229-5 that the UDS protocol may be implemented over an internet protocol (Internet Protocol, IP) (diagnostic over internet protocol, DoIP). For another example, 14229-3 defines that the UDS protocol may be implemented over a controller area network (controller area network, CAN) bus. The UDS defines a unified format for diagnostic requests and diagnostic responses across different diagnostic functions.

### 3. Session permission

The session permission is a mechanism that requires identity authentication when a diagnostic tool establishes communication with an ECU of a vehicle during vehicle diagnosis. The session permission is designed to ensure that only authorized users can access and modify ECU settings and parameters, thereby ensuring vehicle security and reliability.

The session permission is usually divided into a session permission 01, a session permission 02, and a session permission 03.

The session permission 01 is used to read basic information such as trouble codes stored in the ECU and real-time data streams.

For the session permission 02, in addition to a function of the session permission 01, a simple programming and configuration operation may be further performed on the ECU, for example, resetting an adaptive value or restoring a default setting.

For the session permission 03, in addition to a function of the session permission 02, a higher-level programming operation may be further performed, for example, updating a program and firmware of the ECU, or programming a new key.

### 4. Security level

The security level is used to determine whether a user can access important data in an ECU or request an ECU to perform a diagnostic service that affects vehicle security. The user's access to data or UDS services protected by a security level is denied until that level is unlocked. For example, the security level may include three levels: a level 1, a level 2, and a level 3. The level 1 indicates that a simple encryption algorithm is used. The level 2 indicates that a complex encryption algorithm is used. The level 3 indicates that a more complex encryption algorithm is used.

It should be understood that the security level can be divided into more or fewer levels and named in a specific way. This is not specifically limited in embodiments of this application.

### 5. Software component (software component, SWC)

The software component belongs to an application layer of an AUTOSAR architecture. The software component is a module that encapsulates a part or all of electronic functions of a vehicle. The software component includes specific function implementation of the electronic function and corresponding descriptions. All software components interact with each other through a virtual function bus to form AUTOSAR application software. The application software includes a plurality of SWCs that can interact with each other. The interaction between the SWCs can be implemented by using a communication mechanism provided by the virtual function bus (virtual function bus, VFB).

In a process of constructing the SWC, a port (port) of the SWC may be defined. The port may represent content and a direction of communication between the SWC and outside of the SWC. The SWC may communicate or interact with another SWC or hardware via the defined port. Functions of the SWC can be implemented by a runnable entity (runnable entity). The SWC may include one or more runnable units, that is, a runnable entity. The runnable entity may implement a function exhibited by a software component in which the SWC is located. For example, the runnable entity may be bound to a corresponding runtime environment (runtime environment, RTE) event. When the bound event occurs, the runnable entity may be triggered. The runnable entity may complete its own function via data access or operation invocation through the port, and provide a data processing result or operation to outside through the port.

### 6. Diagnostic management module

The diagnostic management module implements a diagnostic function on an AUTOSAR adaptive platform (adaptive platform, AP) based on the ISO 14229-1 protocol. The diagnostic management module can check, analyze, and determine a status of an intelligent driving system of a vehicle without disassembling a device of the vehicle, to determine a trouble location and a trouble cause of the vehicle. The diagnostic management module has dynamic scalability and supports an application scenario including a plurality of ECUs.

The AP-based diagnostic management module includes the following management content:

### (1). Diagnostic communication sub-cluster

Similar to content of a diagnostic communication manager (diagnostic communication manager, DCM) submodule of an AUTOSAR classic platform (classic platform, CP), the diagnostic communication sub-cluster provides a diagnostic session, a UDS service function, a forwarding function, and DoIP-based communication.

### (2). Diagnostic event processing and corresponding data storage

Based on a change in a status domain value of a diagnostic trouble code (diagnostic trouble code, DTC), the function supports notification for events such as re-initialization of diagnostic monitoring tasks, information storage, and changes of startup conditions in application components.

The function implements content that includes content of a diagnostic event manager (diagnostic event manager, DEM) submodule of the AUTOSAR classic platform, including DTC management, and DTC extended data recording and storage.

### (3). Threshold filtering algorithm function based on statistics and time counting

Optionally, the diagnostic management module needs to load diagnostic data of an entire vehicle, to complete integrated deployment of the diagnostic data of the entire vehicle. The diagnostic data includes information such as a diagnostic service, a DID, a DTC, and a routine (routine) of the vehicle. The diagnostic data may come from different original equipment manufacturers (original equipment manufacturers, OEMs) or vehicle manufacturers. A mode of carrying diagnostic data varies with a different source. For example, diagnostic data provided by a vehicle manufacturer may be a diagnostic data file in an Excel format, and diagnostic data provided by an OEM may be a diagnostic data file in a document (document, DOC) format. The diagnostic data may alternatively be a diagnostic data file in an open diagnostic data exchange (open diagnostic data exchange, ODX) format, a diagnostic data file in an AUTOSAR extensible markup language (AUTOSAR extensible markup language, ARXML) format, or the like.

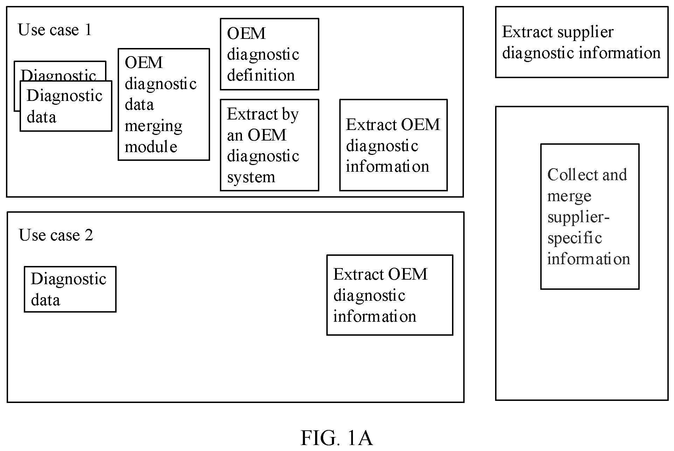

An AUTOSAR specification defines a configuration process of the diagnostic data, which naturally supports distributed configuration. The diagnostic data provided by the vehicle manufacturer or the OEM needs to be integrated into an ARXML file for deployment. FIG. 1A shows a diagnostic extract template (diagnostic extract template, DEXT) defined by the AUTOSAR. An AUTOSAR protocol defines a diagnostic configuration process of two common use cases. In a use case 1, the OEM provides a diagnostic data file in the ARXML format. An OEM diagnostic data merging module can combine a plurality of diagnostic data files in the ARXML format provided by the OEM. The OEM diagnostic data merging module may support collection and merging of diagnostic data based on OEM-specific requirements. In a use case 2, the OEM provides diagnostic data files in the ARXML format based on the diagnostic extract template, and a plurality of application developers (application developer) provide implementation-related information related. A diagnostic data merging process is completely executed by an ECU supplier (supplier).

Therefore, diagnostic data files in different formats provided by the vehicle manufacturer or the OEM need to be converted into the diagnostic data files in the ARXML format.

In a conventional technology, users can manually configure diagnostic data files in an ARXML format by using an Artop configuration tool (an ARXML diagnostic data file configuration tool officially provided by the AUTOSAR). However, when the users need to complete configuration of a single DID, a plurality of configuration items need to be configured. In addition to attributes of each configuration item, each configuration item needs to be configured with a related reference relationship. Configuration of diagnostic data in the ARXML format is complex and cumbersome.

To resolve the foregoing problem, an embodiment of this application provides a diagnostic data processing method. In the method, a diagnostic data processing apparatus may generate a first template file based on N files in a first data format, where the first template file includes an index of first information of each diagnostic instance, that is of the N files in the first data format, in a corresponding file in the first data format. Then, the diagnostic data processing apparatus automatically generates a file in a second data format based on the N files in the first data format and the first template file.

The file in the first data format may be a file in an Excel data format, a file in a DOC data format, or a file in an ODX data format, and the file in the second data format may be a file in an ARXML data format. Alternatively, the file in the first data format may be a file in an Excel data format, a file in a DOC data format, or a file in an ARXML data format, and the file in the second data format may be a file in an ODX data format. It should be understood that the first data format and the second data format of the file are merely examples. The first data format and the second data format of the file are not specifically limited in embodiments of this application.

In this way, the diagnostic data processing apparatus can simplify a configuration procedure of a diagnostic data file in an ARXML format, and improve accuracy of configuration data.

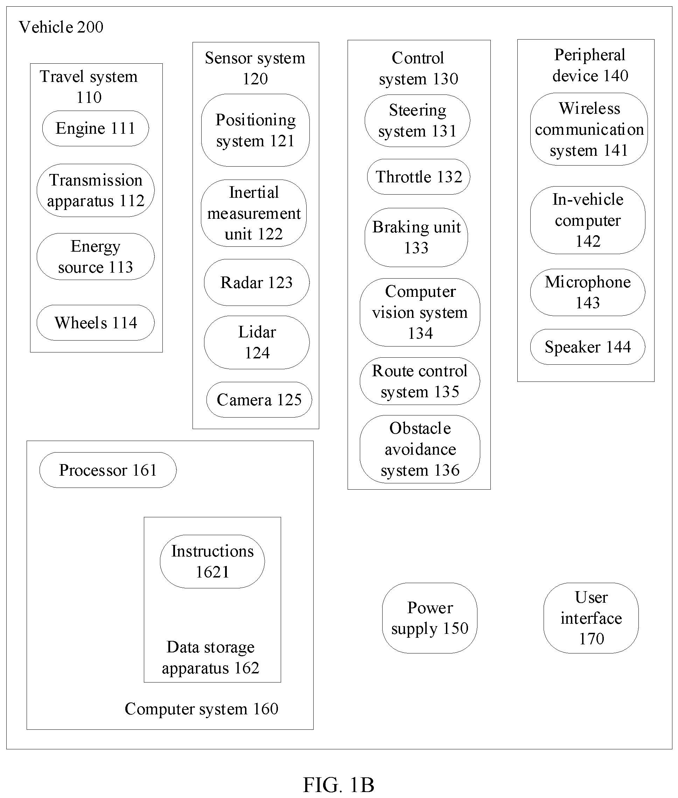

FIG. 1B is a diagram of a structure of a vehicle according to an embodiment of this application. The vehicle 200 may include various subsystems, such as a travel system 110, a sensor system 120, a control system 130, one or more peripheral devices 140, a power supply 150, a computer system 160, and a user interface 170. Optionally, the vehicle 200 may include more or fewer subsystems, and each subsystem may include a plurality of elements. In addition, each subsystem and element of the vehicle 200 may be interconnected in a wired or wireless manner.

The travel system 110 may include a component that provides power for motion of the vehicle 200. In an embodiment, the travel system 110 may include an engine 111, a transmission apparatus 112, an energy source 113, and wheels 114. The engine 111 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 111 converts the energy source 113 into mechanical energy.

Examples of the energy source 113 include gasoline, diesel, another oil-based fuel, propane, another compressed gas-based fuel, ethanol, a solar panel, a battery, and another power source. The energy source 113 may also provide energy for another system of the vehicle 200.

The transmission apparatus 112 may transmit mechanical power from the engine 111 to the wheels 114. The transmission apparatus 112 may include a gearbox, a differential, and a drive shaft. In an embodiment, the transmission apparatus 112 may further include another component, for example, a clutch. The drive shaft may include one or more shafts that may be coupled to one or more wheels 114.

The sensor system 120 may include several sensors that can sense information about an ambient environment of the vehicle 200. For example, the sensor system 120 may include a positioning system 121 (the positioning system may be a global positioning system (global positioning system, GPS), a BeiDou system, or another positioning system), an inertial measurement unit (inertial measurement unit, IMU) 122, a radar 123, a lidar 124, and a camera 125.

The control system 130 may control operations of the vehicle 200 and its components. The control system 130 may include various elements, including a steering system 131, a throttle 132, a braking unit 133, a computer vision system 134, a route control system 135, and an obstacle avoidance system 136.

Certainly, in an example, the control system 130 may additionally or alternatively include components other than the components shown and described. Alternatively, some of the foregoing components may be removed.

The vehicle 200 interacts with an external sensor, another vehicle, another computer system, or a user by using the peripheral device 140. The peripheral device 140 may include a wireless communication system 141, an in-vehicle computer 142, a microphone 143, and/or a speaker 144.

The power supply 150 may provide power to various components of the vehicle 200. In an embodiment, the power supply 150 may be a rechargeable lithium-ion or lead-acid battery. One or more battery packs of such a battery may be configured as a power supply to provide electrical power to the various components of the vehicle 200. In some embodiments, the power supply 150 and the energy source 113 may be implemented together. In this embodiment of this application, the power supply 150 may be a lithium iron phosphate power battery. It should be understood that the power supply 150 may alternatively be another battery. This is not specifically limited in embodiments of this application.

Some or all of functions of the vehicle 200 are controlled by the computer system 160. The computer system 160 may include at least one processor 161. The processor 161 executes instructions 1621 stored in a non-transitory computer-readable medium such as a data storage apparatus 162. The computer system 160 may alternatively be a plurality of computing devices that control individual components or subsystems of the vehicle 200 in a distributed manner.

The processor 161 may be any conventional processor, such as a commercially available central processing unit (central processing unit, CPU). Optionally, the processor may be a dedicated device, for example, an application-specific integrated circuit (application-specific integrated circuit, ASIC) or another hardware-based processor.

In various aspects described herein, the processor may be located far away from the vehicle and wirelessly communicate with the vehicle. In another aspect, some processes described herein are performed on a processor disposed inside the vehicle, while other processes are performed by a remote processor, including performing a step necessary for single manipulation.

In some embodiments, the data storage apparatus 162 may include the instructions 1621 (for example, program logic), and the instructions 1621 may be executed by the processor 161 to perform various functions of the vehicle 200, including those functions described above. The data storage apparatus 162 may also include additional instructions, including instructions to send data to, receive data from, interact with, and/or control one or more of the travel system 110, the sensor system 120, the control system 130, and the peripheral device 140.

In addition to the instructions 1621, the data storage apparatus 162 may store data, such as a road map, route information, a location, a direction, a speed, and other vehicle data of the vehicle, and other information.

The user interface 170 is configured to provide information for or receive information from the user of the vehicle 200. Optionally, the user interface 170 may include an interface for interaction and information exchange between one or more input/output devices in a set of peripheral devices 140 and the user. The one or more input/output devices in the set of peripheral devices 140 may be one or more of, for example, the wireless communication system 141, the in-vehicle computer 142, the microphone 143, and the speaker 144.

The computer system 160 may control the functions of the vehicle 200 based on inputs received from various subsystems (for example, the travel system 110, the sensor system 120, and the control system 130) and from the user interface 170.

Optionally, one or more of the foregoing components may be mounted separately from or associated with the vehicle 200. For example, the data storage apparatus 162 may partially or completely exist separately from the vehicle 200. The foregoing components may be communicatively coupled together in a wired and/or wireless manner.

Optionally, the foregoing components are merely examples. In an actual application, components in the foregoing modules may be added or deleted based on an actual requirement. FIG. 1B should not be understood as a limitation on embodiments of this application.

The vehicle 200 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of this application.

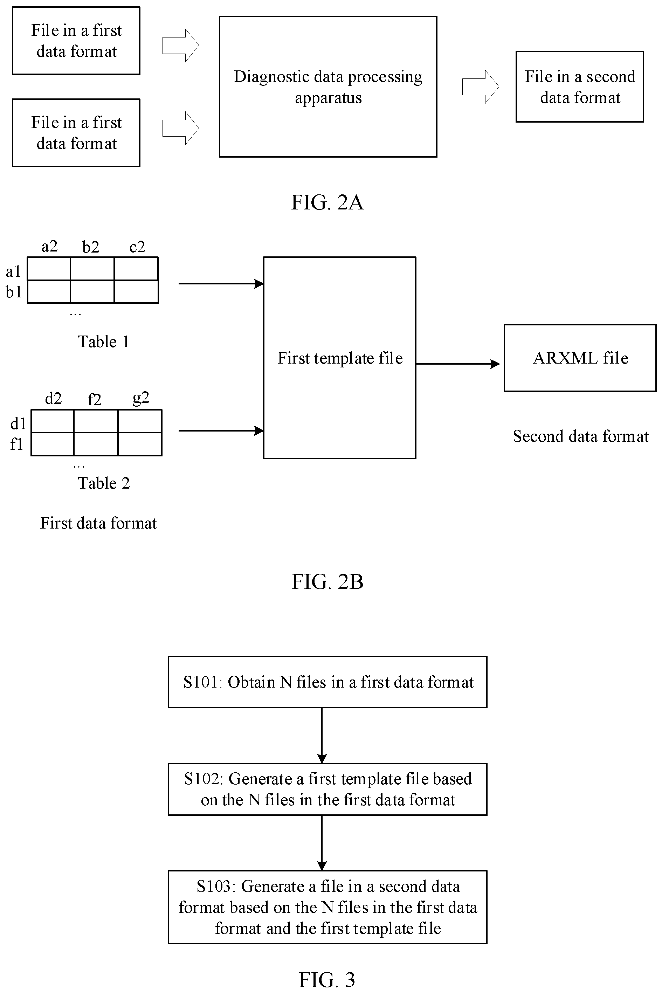

FIG. 2A is a diagram of a diagnostic data processing method according to an embodiment of this application. The diagnostic data processing apparatus may convert N files in a first data format into a file in a second data format, where N is greater than or equal to 1.

Optionally, a function of the diagnostic data processing apparatus may be implemented by a mobile data center (mobile data center, MDC).

In this embodiment of this application, an example in which a file in the first format is a diagnostic data file in an Excel format, and the file in the second format is a diagnostic data file in an ARXML format is used for description.

For example, that two diagnostic data files in an Excel table format are converted into one diagnostic data file in the ARXML format is used as an example. As shown in FIG. 2B, the diagnostic data processing apparatus may first obtain a first template file based on the two diagnostic data files in the Excel table format, and then obtain one diagnostic data file in the ARXML format based on the two diagnostic data files in the Excel table format and the first template file.

For example, FIG. 3 is a schematic flowchart of a diagnostic data processing method according to an embodiment of this application. The method may be performed by a diagnostic data processing apparatus, or may be performed by a chip, a processing circuit, or the like of the apparatus. The method may include the following steps.

S101: The diagnostic data processing apparatus obtains N files in a first data format.

Optionally, the N files in the first data format are used for diagnosis of a same vehicle.

Optionally, the N files in the first data format may be files from a same vehicle manufacturer or a same OEM.

For files from different vehicle manufacturers or different OEMs, the diagnostic data processing apparatus may separately perform processing on these files a plurality of times to obtain a file in a second data format.

Optionally, in this embodiment of this application, two files in the first data format may be used as an example for description, where the two files in the first data format are a file 1 and a file 2. The file 1 may include at least one diagnostic instance. For example, the file 1 includes two DIDs, three routines, and five DTCs. The file 2 may also include at least one diagnostic instance. For example, the file 2 includes three DIDs, three routines, and four DTCs.

Optionally, the N files in the first data format include a diagnostic instance and first information of the diagnostic instance, where N is greater than or equal to 1.

Optionally, the diagnostic instance may include at least one data identifier (data identifier, DID) and/or at least one routine.

Optionally, when the diagnostic instance is a DID, first information of the DID includes an identifier (id) value of the DID, a size (size) of data of the DID, a communication identifier (specifier) of the DID, an expected storage path of the data of the DID in the file in the second data format, and access permission of the DID. The first information of the DID may further include whether the DID is readable (readable) and read access permission of the DID in a case in which the DID is readable. The first information of the DID may further include whether the DID is writable (writeable) and write access permission of the DID in a case in which the DID is writable. The first information of the DID may further include whether the DID is input/output controllable (input/output controllable, IO controllable) and input/output controllable access permission of the DID.

The access permission may include session (session) permission and a security level (security level).

Optionally, when the diagnostic instance is a routine, first information of the routine includes an identifier (id) value of the routine, a communication identifier (specifier) of the routine, an expected storage path of data of the routine in the file in the second data format, and access permission of the routine. The first information of the routine may further include a diagnostic sub-function supported by the routine.

In an embodiment, the diagnostic instance may further include M diagnostic trouble codes (diagnostic trouble codes, DTCs), where M is greater than or equal to 1. First information of the DTC may include an expected storage path of data of the DTC in the file in the second data format, a DTC record number, a frozen frame, and M groups of trouble-triggering events.

S102: The diagnostic data processing apparatus generates a first template file based on the N files in the first data format.

Optionally, the first template file includes an index of first information of each diagnostic instance, that is of the N files in the first data format, in a corresponding file in the first data format. The first template file may be automatically generated, or may be manually input by a user.

For example, if the file in the first data format is a diagnostic data file in an Excel table, the first template file may be in a location of the first information of each diagnostic instance in the Excel table, for example, the first information is in a row a and a column b in the Excel table. The first template file may identify only a start line and a start column of the first information of each diagnostic information.

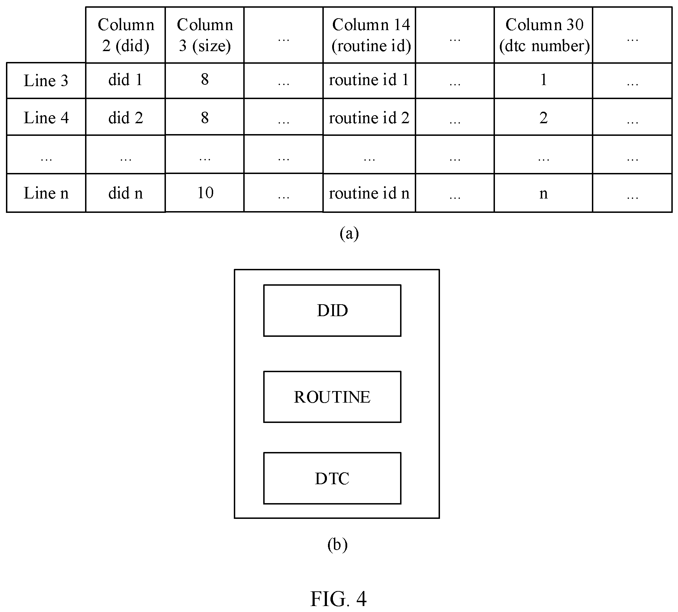

As shown in FIG. 4, the first template file may include locations of the first information of the DID, the routine, and the DTC in the Excel table.

Optionally, the locations of the first information of the DID, the routine, and the DTC in the Excel table may be respectively shown in (a) in FIG. 4. The first template file may include the locations of the first information of the DID, the routine, and the DTC in the Excel table, as shown in (b) in FIG. 4. Content in (b) in FIG. 4 is specifically as follows:

In an embodiment, the first template file may be a file in a DOC format, and a location of the first information of each diagnostic instance in the Excel table may be filled in the first template file in a text form.

For example, a start line and a start column of first information of each DID may be shown as follows:
DID:
- file path: file 1
- arpackage path: oem1/didPackage/
- start line: line 3
- id: column 2
- size: column 3
- sessions: column xx
- security level: column xx
- readable: column xx
   - sessions: column xx
   - security level: column xx
- writeable: column xx
   - sessions: column xx
   - security level: column xx
- IO controllable: column xx
   - sessions: column xx
   - security level: column xx
- specifier: column xx

The DID is located in the file 1, and arpackage path in the DID indicates an expected storage path of data of the DID in the file in the second data format, for example, oem1/didPackage/. start line indicates a start line of the first information in the DID, for example, a line 3. For example, as shown in (a) in FIG. 4, the DID starts from the line 3 in the file 1, id is in the column 2, and size is in the column 3. A start line and a start column of other first information in the DID are correspondingly filled in the first template file. Optionally, end line and column information of the first information may be further filled in the first template file. For example, id of the DID ends at the column 2 and the line 30 in the file 1. A specific indexing manner in the first template file is not specifically limited in this application.

Optionally, a start line and a start column of first information of each routine in the first template file may be shown as follows:
routine:
- file path: file 2
- arpackage path: oem1/ routinePackage/
- start line: line 3
- id: column 14
- sessions: column xx
- security level: column xx
- start routine: column xx
- stop routine: column xx
- request routine results: column xx
- specifier: column xx

The routine is located in the file 2, and arpackage path in the routine indicates an expected storage path of data of the routine in the file in the second data format, for example, oem1/routinePackage/. start line indicates a start line of the first information in the routine, for example, a line 3. For example, as shown in (a) in FIG. 4, the routine starts from the line 3 in the file 2, and id is in the column 14. A start line and a start column of other first information in the routine are correspondingly filled in the first template file. Optionally, end line and column information of the first information may be further filled in the first template file. For example, id of the routine ends at the column 14 and the line 32 in the file 1. A specific indexing manner in the first template file is not specifically limited in this application.

Optionally, a start line and a start column of first information of each DTC in the first template file may be shown as follows:
DTC:
- file path: file 1
- arpackage path: oem1/ dtcPackage/
- start line: line 3
- dtc number: column 30
- snapshot: column xx
- events: column xx

The DTC is located in the file 1, and arpackage path in the DTC indicates an expected storage path of data of the DTC in the file in the second data format, for example, oem1/dtcPackage/. start line indicates a start line of the first information in the DTC, for example, a line 3. For example, as shown in (a) in FIG. 4, the DTC starts from the line 3 in the file 1, and dtc number is in the column 30. A start line and a start column of other first information in the DTC are correspondingly filled in the first template file. Optionally, end line and column information of the first information may be further filled in the first template file. For example, dtc number of the DTC ends at the column 30 and the line 32 in the file 1. A specific indexing manner in the first template file is not specifically limited in this application.

In another embodiment, the first template file may alternatively be an Excel table file, and a location, of the first information of each diagnostic instance, in the Excel table, may be filled in the first template file in a table form.

For example, a start line and a start column of first information of each DID in the first template file may be shown in the following Table 1:

**Table 1**

| file path | arpackage path | start line | id | size | sessions | security level | ... |
|---|---|---|---|---|---|---|---|
| File 1 | oem1/didPackage/ | Line 3 | Column 2 | Column 3 | Column xx | Column xx | ... |

For example, a start line and a start column of first information of each routine in the first template file may be shown in the following Table 2:

**Table 2**

| file path | arpackage path | start line | id | sessions | security level | ... |
|---|---|---|---|---|---|---|
| File 2 | oem1/ routinePackage/ | Line 3 | Column 14 | Column xx | Column xx | ... |

For another example, a start line and a start column of first information of each DTC in the first template file may be shown in the following Table 3:

**Table 3**

| file path | arpackage path | start line | dtc number | snapshot | events |
|---|---|---|---|---|---|
| File 1 | oem1/ dtcPackage/ | Line 3 | Column 30 | Column xx | Column xx |

In an embodiment, the diagnostic data processing apparatus may further generate a service table based on a diagnostic service that can be provided by a vehicle.

The service table includes diagnostic service information that can be provided by the vehicle. The diagnostic service information includes a name of a unified diagnostic service, a unified diagnostic service sub-function, an addressing mode of the unified diagnostic service, and access permission of the unified diagnostic service.

Optionally, the vehicle may provide a plurality of diagnostic services, for example, a diagnostic session control service, a diagnostic ECU reset service, and an identity authentication service. In this application, an example in which the diagnostic service is the diagnostic ECU reset service is used for description.

Optionally, the service table includes the name of the unified diagnostic service, whether the vehicle supports the unified diagnostic service, the unified diagnostic service sub-function, session permission of the unified diagnostic service sub-function, a security level of the unified diagnostic service sub-function, and an addressing mode of the unified diagnostic service sub-function.

A diagnostic service identifier (service identifier, SID) may alternatively indicate a unified diagnostic service. For example, 0x11 indicates the diagnostic ECU reset service.

Optionally, the user may fill in the service table based on information such as access permission in the file in the first data format. For example, the service table may be shown in Table 4.

**Table 4**

| Diagnostic service | Supported or not | Service sub-function | Session permission | Security level | Addressing mode |
|---|---|---|---|---|---|
| Diagnostic ECU reset (0x11) | Yes | 0x01 | 0x01: Yes | Level 1: Yes | Physical: Yes |
| | | | 0x02: Yes | Level 3: | Functional: Yes |
| | | | 0x03: Yes | | |
| | Yes | 0x03 | 0x01: Yes | Level 1: | Physical: Yes |
| | | | 0x02: Yes | Level 3: Yes | Functional: Yes |
| | | | 0x03: Yes | | |
| | | Custom | 0x01: | Level 1: | Physical: |
| | | | 0x02: | Level 3: | Functional: |
| | | | 0x03: | | |

The name of the unified diagnostic service may be the diagnostic ECU reset service, the vehicle supports the diagnostic ECU reset service, and a diagnostic ECU reset service sub-function includes 0x01 and 0x03.

Session permission of the diagnostic ECU reset service sub-function 0x01 includes 0x01, 0x02, and 0x03. A security level of the diagnostic ECU reset service sub-function 0x01 is a level 1. An addressing mode of the diagnostic ECU reset service sub-function 0x01 is a physical addressing service or a functional addressing service.

Session permission of the diagnostic ECU reset service sub-function 0x03 includes 0x01, 0x02, and 0x03. A security level of the diagnostic ECU reset service sub-function 0x03 is a level 3. An addressing mode of the diagnostic ECU reset service sub-function 0x03 is a physical addressing service or a functional addressing service.

S103: The diagnostic data processing apparatus generates the file in the second data format based on the N files in the first data format and the first template file.

Optionally, the file in the second data format may be a file in an ARXML data format.

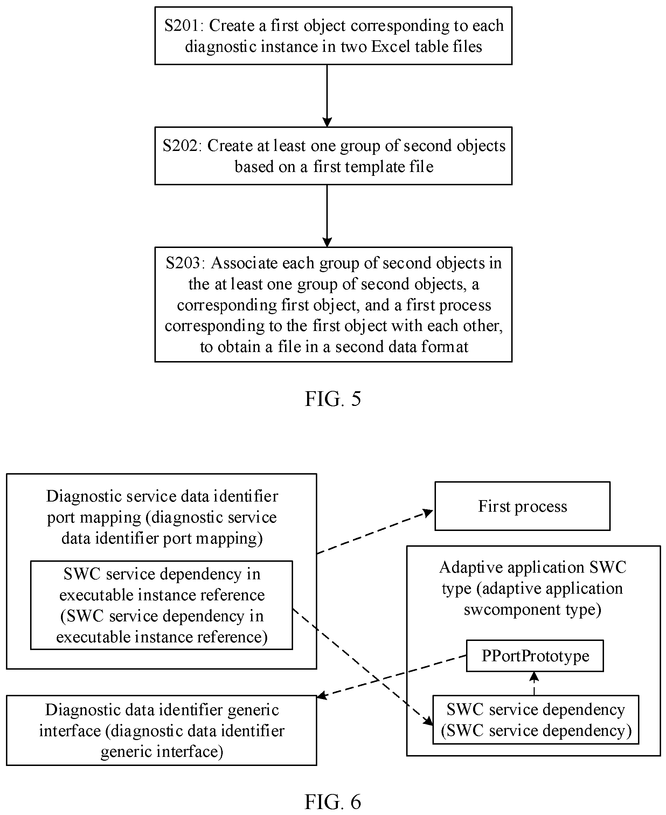

Optionally, the diagnostic data processing apparatus may obtain a file in an ARXML data format based on an Excel table file and the first template file. For a specific process, refer to steps S201 to S203 shown in FIG. 5.

S201: The diagnostic data processing apparatus creates a first object corresponding to each diagnostic instance in two Excel table files.

S202: The diagnostic data processing apparatus creates at least one group of second objects based on the first template file.

Each diagnostic instance corresponds to one group of second objects.

S203: The diagnostic data processing apparatus associates each group of second objects in the at least one group of second objects, a corresponding first object, and a first process corresponding to the first object with each other, to obtain the file in the second data format.

The first object and the second object conform to the ARXML data format, and the first process is used to implement a function described by the first object.

Optionally, for DIDs in the two Excel table files, the diagnostic data processing apparatus creates the first information of the DID in the second data format based on the two Excel table files and an index of the first information of the DID, that is of the first template file, in the Excel table file, to obtain the file in the second data format.

Optionally, the diagnostic data processing apparatus may create a first object corresponding to each DID.

For example, the diagnostic data processing apparatus creates a diagnostic data identifier (diagnostic data identifier) object corresponding to each DID.

Optionally, the diagnostic data processing apparatus creates the at least one group of second objects based on the first template file.

For example, if the DID in the first template file is readable, a diagnostic read data (by identifier) (diagnostic read data by identifier) object is created; or if the DID in the first template file is writable, a diagnostic write data (by identifier) (diagnostic write data by identifier) object is created. The diagnostic data processing apparatus may further create a corresponding diagnostic session (diagnostic session) object and a corresponding diagnostic security level (diagnostic security level) object based on access permission, read access permission, and write access permission of the DID configured in the DID.

Optionally, the diagnostic data processing apparatus associates the group of second objects, the first object, and the first process with each other, to obtain the file in the second data format. The first process is used to implement the function described by the first object.

For example, the diagnostic data processing apparatus may associate the diagnostic data identifier object, the diagnostic read data (by identifier) object, the diagnostic write data (by identifier) object, the diagnostic session object, the diagnostic security level object, and the first process with each other.

In an embodiment, as shown in FIG. 6, the diagnostic data processing apparatus may create a first mapping, namely, a diagnostic service data identifier port mapping (diagnostic service data identifier port mapping), and associate the first process with the second object and the first object corresponding to the DID. The first process may be a process design (process design).

Specifically, after creating the diagnostic service data identifier port mapping, the diagnostic data processing apparatus creates an SWC service dependency in executable instance reference (SWC service dependency in executable instance reference) in the diagnostic service data identifier port mapping, and associates the SWC service dependency in executable instance reference with an SWC service dependency (SWC service dependency) under an adaptive application SWC type (adaptive application swcomponent type), where the SWC service dependency is associated with a provide port (PPortPrototype) under the adaptive application SWC type. PPortPrototype is then associated with a diagnostic data identifier generic interface (diagnostic data identifier generic interface).

An attribute short name (short name) of PPortPrototype should be the same as a specifier of the DID on a configuration interface. Then, the diagnostic data processing apparatus may associate the first object, the second object, and the first process with each other by using the specifier of the DID in the first template file and the diagnostic service data identifier port mapping.

Optionally, for routines in the two Excel table files, the diagnostic data processing apparatus creates the first information of the routine in the second data format based on the two Excel table files and an index of the first information of the routine, that is of the first template file, in the Excel table file, to obtain the file in the second data format.

Optionally, the diagnostic data processing apparatus may create a first object corresponding to each routine

For example, the diagnostic data processing apparatus creates a diagnostic routine (diagnostic routine) object corresponding to each routine. The diagnostic data supports a 0x01 sub-function start routine (start routine), and the first object may be a diagnostic start routine (diagnostic start routine) object.

Optionally, the diagnostic data processing apparatus then creates the at least one group of second objects based on the first template file.

For example, if the routine in the first template file supports a 0x02 stop routine (stop routine), a diagnostic stop routine (diagnostic stop routine) object is created; or if the routine in the first template file supports a 0x03 request routine result (request routine result), a diagnostic request routine result (diagnostic request routine result) object is created, and zero or a plurality of diagnostic parameter (diagnostic parameter) objects are created based on function input/output parameters required for the start routine, the stop routine, and the request execution result in the first template. The function input/output parameters occupy different bytes. Then, a bit offset (bit offset) attribute of a diagnostic parameter object can be set to combine bytes required for the input/output parameters. A diagnostic session (diagnostic session) object and a diagnostic security level (diagnostic security level) object are created based on the access permission configured in routine.

Optionally, the diagnostic data processing apparatus associates the group of second objects, the first object, and the first process with each other, to obtain the file in the second data format. The first process is used to implement the function described by the first object.

For example, the diagnostic data processing apparatus may associate the diagnostic start routine object, the diagnostic stop routine object, the diagnostic request routine result object, the diagnostic parameter object, the diagnostic session object, the diagnostic security level object, and the first process with each other.

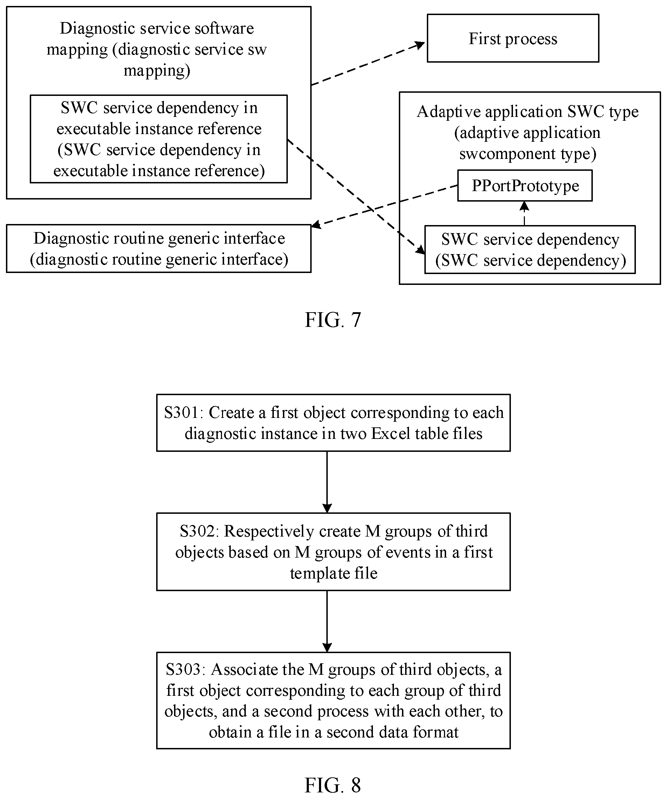

In an embodiment, as shown in FIG. 7, the diagnostic data processing apparatus may create a second mapping, namely, a diagnostic service software mapping (diagnostic service sw mapping), and associate the first process, the second object, and the first object corresponding to the routine with each other. The first process may be a process design (process design).

Specifically, for a routine instance, after creating a first mapping, the diagnostic data processing apparatus may create an SWC service dependency in executable instance reference (SWC service dependency in executable instance reference) in the first mapping, and associate the SWC service dependency in executable instance reference with an SWC service dependency (SWC service dependency) under an adaptive application SWC type (adaptive application swcomponent type), where the SWC service dependency is associated with a provide port (PPortPrototype) under the adaptive application SWC type. PPortPrototype is then associated with a diagnostic routine generic interface (diagnostic routine generic interface).

An attribute short name (short name) of PPortPrototype should be the same as a specifier of the routine on a configuration interface. Then, the diagnostic data processing apparatus may associate the first object, the second object, and the first process with each other by using the specifier of the routine in the first template file and the diagnostic service software mapping.

Optionally, the diagnostic data processing apparatus may obtain a file in an ARXML data format based on an Excel table file and the first template file. For a specific process, refer to steps S301 to S303 shown in FIG. 8.

S301: The diagnostic data processing apparatus creates a first object corresponding to each diagnostic instance in two Excel table files.

S302: The diagnostic data processing apparatus respectively creates M groups of third objects based on M groups of events in the first template file.

S303: The diagnostic data processing apparatus associates the M groups of third objects, a first object corresponding to each group of third objects, and the second process with each other, to obtain the file in the second data format.

The first object and the third object conform to the ARXML data format, and the second process is used to implement a function described by the first object.

Optionally, for M DTCs in the two Excel table files, the diagnostic data processing apparatus creates first information of the M DTCs in the second data format based on the two Excel table files and an index of the first information of the M DTCs, that is of the first template file, in the Excel table file, to obtain the file in the second data format.

Optionally, the diagnostic data processing apparatus may create a first object corresponding to each DTC.

For example, the diagnostic data processing apparatus creates a diagnostic trouble code unified diagnostic service (diagnostic trouble code unified diagnostic service) object corresponding to each DTC.

Optionally, the diagnostic data processing apparatus then respectively creates the M groups of third objects based on the M groups of trouble-triggering events in the first template file. One third object is correspondingly created based on one event.

For example, a diagnostic event (diagnostic event) object is created based on each event. The M groups of diagnostic events are respectively created based on the M groups of events.

Optionally, the diagnostic data processing apparatus associates the M groups of third objects, a first object corresponding to each group of third objects, and the second process with each other, to obtain the file in the second data format. The second process is used to implement a trouble-triggering event corresponding to the first object.

For example, the diagnostic data processing apparatus may create a diagnostic event to trouble code unified diagnostic service mapping (diagnostic event to trouble code unified diagnostic service mapping), and associate the diagnostic trouble code unified diagnostic service object with the corresponding M groups of diagnostic event objects. One diagnostic trouble code unified diagnostic service object may be associated with a plurality of diagnostic event objects, and one diagnostic event object may be associated with only one diagnostic trouble code unified diagnostic service.

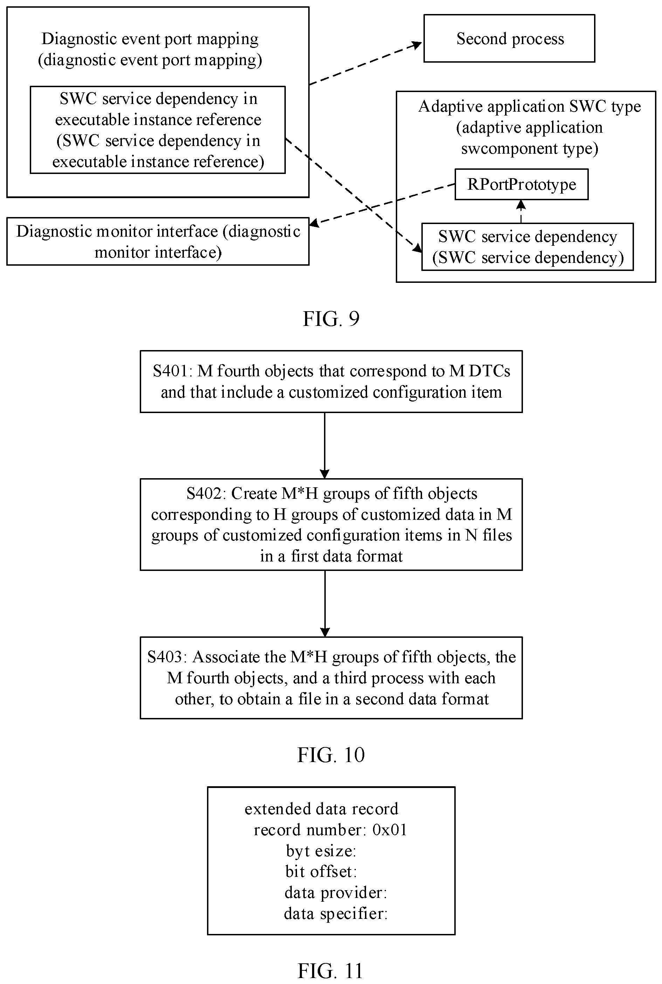

Then, as shown in FIG. 9, the diagnostic data processing apparatus may create a diagnostic event port mapping (diagnostic event port mapping) of each event, and associate each diagnostic event object with a corresponding second process. The second process may be a process design (process design).

Specifically, after creating the diagnostic event port mapping, the diagnostic data processing apparatus creates an SWC service dependency in executable instance reference (SWC service dependency in executable instance reference) in the diagnostic event port mapping, and associates the SWC service dependency in executable instance reference with an SWC service dependency (SWC service dependency) under an adaptive application SWC type (adaptive application swcomponent type), where the SWC service dependency is associated with a require port (RPortPrototype) under the adaptive application SWC type. RPortPrototype is then associated with a diagnostic monitor interface (diagnostic monitor interface).

An attribute short name (short name) of RPortPrototype should be the same as a specifier of the DTC on a configuration interface. Then, the diagnostic data processing apparatus may associate the first object, the third object, and the second process with each other by using the specifier of the DTC in the first template file and the diagnostic event port mapping.

In an embodiment, the first template file may further include M groups of customized configuration items. When creating the object corresponding to each DTC or each event, the diagnostic data processing apparatus may also create an object corresponding to each customized configuration item. Each group of customized configuration items includes H groups of customized data, where H is greater than or equal to 1.

Each group of customized configuration items may include customized configuration information such as a diagnostic extended data record (diagnostic extended data record), a diagnostic operation cycle (diagnostic operation cycle), and a diagnostic aging (diagnostic aging) counter.

Optionally, that the first template file includes the diagnostic extended data record information is used as an example. A specific process of generating the file in the second data format based on the N files in the first data format and the first template file may further include steps S401 to S403 shown in FIG. 10.

S401: The diagnostic data processing apparatus creates M fourth objects that correspond to M DTCs and that include a customized configuration item.

Each fourth object conforms to the second data format.

S402: The diagnostic data processing apparatus may create M*H groups of fifth objects corresponding to H groups of customized data in the M groups of customized configuration items in the N files in the first data format.

Each fifth object conforms to the second data format.

S403: The diagnostic data processing apparatus associates the M*H groups of fifth objects, the M fourth objects, and a third process with each other, to obtain the file in the second data format.

The third process is used to implement a function described by the fifth object.

For example, for a DTC configured with a diagnostic extended data record, the diagnostic data processing apparatus may create a diagnostic trouble code (diagnostic trouble code props) object corresponding to each DTC. Each group of diagnostic extended data records includes H customized data, that is, each group of diagnostic extended data records includes H diagnostic extended data records. The diagnostic data processing apparatus may create a diagnostic extended data record (diagnostic extended data record) object of each diagnostic extended data record. The diagnostic data processing apparatus associates M*H groups of diagnostic extended data record objects, the M diagnostic trouble code objects, and the third process with each other.

Each diagnostic extended data record includes at least one diagnostic data element, and a plurality of diagnostic data elements may be combined into one extended data record number by modifying a bit offset of the diagnostic data element.

The diagnostic data processing apparatus may further create a diagnostic data element (diagnostic data element) object of each diagnostic data element in each diagnostic extended data record, and associate the M*H groups of diagnostic extended data record objects, M diagnostic trouble code prop objects, each diagnostic extended data record object, and a fourth process with each other. The fourth process is used to implement a function described by the diagnostic extended data record object.

Optionally, the diagnostic data element includes internal diagnostic extended data and external diagnostic extended data. As shown in FIG. 11, if a data provider (data provider) is filled in, it indicates that the diagnostic data element is internal extended data, and if a data specifier (data specifier) is filled in, it indicates that the diagnostic data element is external extended data.

If the diagnostic data element is internal diagnostic extended data, the diagnostic data processing apparatus may create a diagnostic provided data mapping (diagnostic provided data mapping) and associate the data provider (data provider) with a diagnostic data element object.

If the diagnostic data element is external diagnostic extended data, the diagnostic data processing apparatus may create a diagnostic service data mapping (diagnostic service data mapping) and associate the fourth process with a diagnostic data element object.

In an embodiment, the diagnostic data processing apparatus may generate the file in the second data format based on the N files in the first data format, the first template file, and the service table.

Optionally, the diagnostic data processing apparatus may create a sixth object of one service table corresponding to the N files in the first data format. The sixth object conforms to the second data format.

For example, the diagnostic data processing apparatus may create a diagnostic contribution set (diagnostic contribution set) object based on the service table.

Optionally, the diagnostic data processing apparatus may create a group of seventh objects based on diagnostic service information that can be provided by the vehicle and that is configured by the user in the service table. The diagnostic service information includes a unified diagnostic service, a unified diagnostic service sub-function, an addressing mode of the unified diagnostic service, and access permission of the unified diagnostic service.

For example, the vehicle can provide a unified diagnostic service sub-function 0x11 (Ecu reset), and the diagnostic data processing apparatus may create a diagnostic ECU reset (diagnostic Ecu reset) object of the unified diagnostic service sub-function.

Then, the diagnostic data processing apparatus may create a diagnostic access permission (diagnostic access permission) object of the unified diagnostic service sub-function, where the diagnostic access permission object specifically includes a diagnostic session (Diagnostic Session) object and a diagnostic security level (diagnostic security level) object.

The unified diagnostic service sub-function 0x11 supports session permission 0x01, 0x02, and 0x03, and the security level is a level 1. The diagnostic data processing apparatus may respectively create diagnostic session objects corresponding to the session permission 0x01, 0x02, and 0x03, and a diagnostic security level object corresponding to the security level 1.

For another example, the diagnostic data processing apparatus may create two diagnostic service tables (diagnostic service tables). The two diagnostic service tables are respectively a physical addressing service table and a functional addressing service table. The addressing mode of the unified diagnostic service or the unified diagnostic service sub-function may be a physical addressing mode, a functional addressing mode, or a physical and functional addressing mode.

The addressing mode of the unified diagnostic service sub-function 0x11 is a physical and functional addressing mode.

Optionally, the diagnostic data processing apparatus may associate one group of seventh objects, a corresponding sixth object, and a diagnostic service that can be provided by the vehicle with each other, to obtain the file in the second data format.

For example, the diagnostic data processing apparatus may associate a diagnostic contribution set object of the service table, the diagnostic ECU reset object of the unified diagnostic service sub-function 0x11, the diagnostic access permission object, and the two diagnostic service tables with each other, to obtain a file in the ARXML data format.

In an embodiment, the diagnostic data processing apparatus may further associate the created sixth object with the created first object, to obtain the file in the second data format.

For example, the diagnostic data processing apparatus may associate a diagnostic data identifier object corresponding to each DID with a diagnostic contribution set object corresponding to the service table, to obtain a file in the ARXML data format.

For another example, the diagnostic data processing apparatus may further associate a diagnostic routine object corresponding to each routine with a diagnostic contribution set object corresponding to the service table, to obtain a file in the ARXML data format.

For another example, the diagnostic data processing apparatus may further associate a diagnostic trouble code unified diagnostic service object corresponding to each DTC with a diagnostic contribution set object corresponding to the service table, to obtain a file in the ARXML data format.

For another example, the diagnostic data processing apparatus may further associate a diagnostic data identifier object corresponding to each DID, a diagnostic routine object corresponding to each routine, a diagnostic trouble code unified diagnostic service object corresponding to each DTC, and a diagnostic contribution set object corresponding to the service table with each other, to obtain a file in the ARXML data format.

In this way, the diagnostic data processing apparatus can automatically generate the file in the second data format based on the N files in the first data format, without requiring the user to configure a large quantity of configuration items. This simplifies a configuration procedure of a diagnostic data file in the ARXML format and improves accuracy of data configuration.

It should be understood that some operations in procedures of the foregoing method embodiments are randomly combined, and/or a sequence of some operations is randomly changed. In addition, an execution sequence of steps of each procedure is merely an example, and does not constitute a limitation on an execution sequence of the steps. The steps may alternatively be performed in another execution sequence. The descriptions are not intended to indicate that the execution sequence is the only sequence of performing the operations. A person of ordinary skill in the art may figure out a plurality of manners of reordering the operations in this specification. In addition, it should be noted that process details related to a specific embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, other possible steps may be added to the method embodiments. In addition, the foregoing method embodiments may be implemented separately or in combination.

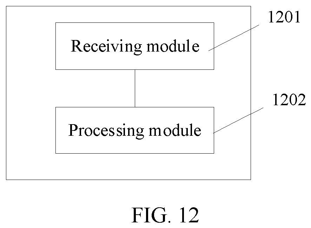

In this embodiment of this application, the diagnostic data processing apparatus may be divided into functional modules based on the foregoing method example. When each functional module is obtained through division based on each corresponding function, FIG. 12 is a diagram of a possible structure of the diagnostic data processing apparatus in the foregoing embodiment. As shown in FIG. 12, the diagnostic data processing apparatus includes a receiving module 1201 and a processing module 1202. Certainly, the diagnostic data processing apparatus may further include other modules, or the diagnostic data processing apparatus may include fewer modules. This is not limited in embodiments of this application.

The receiving module 1201 is configured to obtain N files in a first data format, where the N files in the first data format include a diagnostic instance and first information of the diagnostic instance, N is greater than or equal to 1, and the N files in the first data format are used for diagnosis of a same vehicle.

The processing module 1202 is configured to generate a first template file based on the N files in the first data format, where the first template file includes an index of first information of each diagnostic instance, that is of the N files in the first data format, in a corresponding file in the first data format.

The processing module 1202 is further configured to generate a file in a second data format based on the N files in the first data format and the first template file.

For a detailed working process of the foregoing system, refer to a corresponding process in the foregoing method embodiments. Details are not described herein again.

An embodiment of this application provides a computer-readable storage medium storing one or more programs. The one or more programs include instructions. When the instructions are executed by a computer, the computer is caused to perform the diagnostic data processing method described in steps S102 and S103, S202 and S203, S302 and S303, and S402 and S403.

An embodiment of this application further provides a computer program product including instructions. When the instructions are run on a computer, the computer is caused to perform the diagnostic data processing method described in steps S102 to S105, S202 and S203, S302 and S303, and S402 and S403 in the foregoing embodiments.

The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

In the several embodiments provided in this application, it should be understood that the disclosed apparatus and method may be implemented in other manners. For example, the described apparatus embodiment is merely an example. For example, division into the modules or the units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may be one or more physical units, may be located in one place, or may be distributed on different places. In an application process, some or all of the units may be selected based on actual requirements to achieve the objectives of the solutions of embodiments.

The foregoing descriptions are merely specific implementations of this application, but are not intended to limit the protection scope of this application. Any variation or replacement within the technical scope disclosed in this application shall fall within the protection scope of this application.

## Claims

1. A diagnostic data processing method, comprising:
obtaining N files in a first data format, wherein the N files in the first data format comprise a diagnostic instance and first information of the diagnostic instance, N is greater than or equal to 1, and the N files in the first data format are used for diagnosis of a same vehicle;
generating a first template file based on the N files in the first data format, wherein the first template file comprises an index of first information of each diagnostic instance, that is of the N files in the first data format, in a corresponding file in the first data format; and
generating a file in a second data format based on the N files in the first data format and the first template file.

2. The method according to claim 1, wherein the generating the file in the second data format based on the N files in the first data format and the first template file comprises:
generating the file in the second data format based on the N files in the first data format, the first template file, and a service table, wherein the service table comprises diagnostic service information providable by a vehicle, the diagnostic service information comprises at least one of a unified diagnostic service, a unified diagnostic service sub-function, an addressing mode of the unified diagnostic service, and access permission of the unified diagnostic service, and the file in the second data format comprises the diagnostic service and a diagnostic instance corresponding to each diagnostic service.

3. The method according to claim 1 or 2, wherein the diagnostic instance comprises a data identifier and/or a diagnostic routine.

4. The method according to any one of claims 1 to 3, wherein the first information comprises at least one of an identifier value of the diagnostic instance, a size of data of the diagnostic instance, a communication identifier of the diagnostic instance, an expected storage path of the data of the diagnostic instance in the file in the second data format, and access permission of the diagnostic instance.

5. The method according to claim 1, wherein the generating the file in the second data format based on the N files in the first data format and the first template file comprises:
creating a first object corresponding to each diagnostic instance in the N files in the first data format, wherein the first object conforms to the second data format;
creating at least one group of second objects based on the first template file, wherein each diagnostic instance corresponds to one group of second objects, and each group of second objects conforms to the second data format; and
associating each group of second objects in the at least one group of second objects, a corresponding first object, and a first process corresponding to the first object with each other, to obtain the file in the second data format, wherein the first process is used to implement a function described by the first object.

6. The method according to claim 1, wherein the diagnostic instance in the N files in the first data format comprises M diagnostic trouble codes, M is greater than or equal to 1, first information of the M diagnostic trouble codes respectively comprises identifiers of M groups of trouble-triggering events, and the first template file further comprises the M groups of events; and the generating the file in the second data format based on the N files in the first data format and the first template file comprises:
creating a first object corresponding to each diagnostic instance in the N files in the first data format, wherein the first object conforms to the second data format;
respectively creating M groups of third objects based on the M groups of events in the first template file, wherein each group of third objects conforms to the second data format; and
associating the M groups of third objects, a first object corresponding to each group of third objects, and a second process with each other, to obtain the file in the second data format, wherein the second process is used to implement a trouble-triggering event corresponding to the first object.

7. The method according to claim 6, wherein the first information of the M diagnostic trouble codes respectively comprises M groups of customized configuration items, each group of customized configuration items comprises H groups of customized data, H is greater than or equal to 1, and the first template file further comprises the M groups of customized configuration items; and after the creating the first object corresponding to each diagnostic instance in the N files in the first data format, the method further comprises:
creating M fourth objects corresponding to the M diagnostic trouble codes in the N files in the first data format, wherein each fourth object conforms to the second data format;
creating M*H groups of fifth objects corresponding to the H groups of customized data in the M groups of customized configuration items in the N files in the first data format, wherein each fifth object conforms to the second data format; and
associating the M*H groups of fifth objects, the M fourth objects, and a third process with each other, to obtain the file in the second data format, wherein the third process is used to implement a function described by the fifth object.

8. The method according to claim 2, wherein the generating the file in the second data format based on the service table comprises:
creating a sixth object of one service table corresponding to the N files in the first data format, wherein the sixth object conforms to the second data format; and
creating a group of seventh objects based on a diagnostic service that the vehicle is capable of providing in the service table, wherein the seventh objects conform to the second data format.

9. The method according to any one of claims 5 to 8, wherein the generating the file in the second data format based on the N files in the first data format, the first template file, and the service table comprises:
creating the first object corresponding to each diagnostic instance in the N files in the first data format;
creating the sixth object of the one service table corresponding to the N files in the first data format; and
associating the created first object with the created sixth object, to obtain the file in the second data format.

10. The method according to any one of claims 1 to 9, wherein
the file in the second data format comprises one or both of an extensible markup language XML file and a global universal diagnostic distance library format ODX file.

11. A diagnostic data processing apparatus, comprising:
a receiving module, configured to obtain N files in a first data format, wherein the N files in the first data format comprise a diagnostic instance and first information of the diagnostic instance, N is greater than or equal to 1, and the N files in the first data format are used for diagnosis of a same vehicle; and
a processing module, configured to generate a first template file based on the N files in the first data format, wherein the first template file comprises an index of first information of each diagnostic instance, that is of the N files in the first data format, in a corresponding file in the first data format; and
the processing module is further configured to generate a file in a second data format based on the N files in the first data format and the first template file.

12. A diagnostic data processing apparatus, comprising a memory and at least one processor, wherein the memory is configured to store program code, and the at least one processor is configured to execute the program code to implement the diagnostic data processing method according to any one of claims 1 to 10.

13. A vehicle, comprising the diagnostic data processing apparatus according to claim 11 or 12.
